Europäisches Patentamt

European Patent Office

Office européen des brevets

(19)

(11) Veröffentlichungsnummer : **0 122 384**
**B1**

(12) **EUROPÄISCHE PATENTSCHRIFT**

(45) Veröffentlichungstag der Patentschrift :
18.06.86

(21) Anmeldenummer : 84101413.7

(22) Anmeldetag : 11.02.84

(51) Int. Cl.⁴ : **B 60 T 13/12**

(54) **Hydraulische Steuereinrichtung.**

(30) Priorität : 15.03.83 DE 3309135

(43) Veröffentlichungstag der Anmeldung :
24.10.84 Patentblatt 84/43

(45) Bekanntmachung des Hinweises auf die Patenterteilung : 18.06.86 Patentblatt 86/25

(84) Benannte Vertragsstaaten :
DE FR GB IT

(56) Entgegenhaltungen :
FR-A- 2 113 963
FR-A- 2 439 112

(73) Patentinhaber : ROBERT BOSCH GMBH
Postfach 50
D-7000 Stuttgart 1 (DE)

(72) Erfinder : Anton, Eckhard
Hermann-Essig-Strasse 106
D-7141 Schwieberdingen (DE)
Erfinder : Hesse, Horst, Dr. Dipl.-Ing.
Auberlenweg 13B
D-7000 Stuttgart 1 (DE)
Erfinder : Höfer, Friedrich Wilhelm, Dipl.-Ing.
Georg-Friedrich-Händel-Weg 6
D-7257 Ditzingen 5 (DE)
Erfinder : Sandau, Hartmut, Dipl.-Ing.
Ludwigsburger Strasse 56
D-7141 Möglingen (DE)
Erfinder : Zirps, Wilhelm
Immanuel-Kant-Strasse 9
D-7251 Hemmingen (DE)

EP 0 122 384 B1

## Beschreibung

### Stand der Technik

Die Erfindung geht aus von einer hydraulischen Steuereinrichtung nach der Gattung des Hauptanspruchs. Bei einer derartigen, z. B. aus der FR-A-2 113 963 bekannten Einrichtung wird Energie nur bei der Einleitung des Bremsvorgangs und für die Korrektur des Bremsdrucks benötigt. Wenn der Druckunterschied des Bremsdrucks bei dessen Korrektur bzw. beim Nachregeln nicht groß genug ist, kann der Schieber des Stromregelventils in der Bremsvorrichtung zum Festdrosseln neigen, d. h. der Schieber bewegt sich nicht mehr so wie er soll, wodurch das Druckniveau der Pumpe für längere Zeit angehoben wird. Die Folge ist unnötige Energieumwandlung, d. h. Erwärmung des Druckmittels.

### Vorteile der Erfindung

Die erfindungsgemäße Steuereinrichtung mit den kennzeichnenden Merkmalen des Hauptanspruchs hat demgegenüber den Vorteil, daß der Druckunterschied des Bremsdrucks bei der Korrektur bzw. beim Nachregeln desselben vergrößert wird. Dadurch wird auch das Festdrosseln des Schiebers verhindert.

Durch die in den Unteransprüchen aufgeführten Maßnahmen sind vorteilhafte Weiterbildungen und Verbesserungen der im Hauptanspruch angegebenen Merkmale möglich.

### Zeichnung

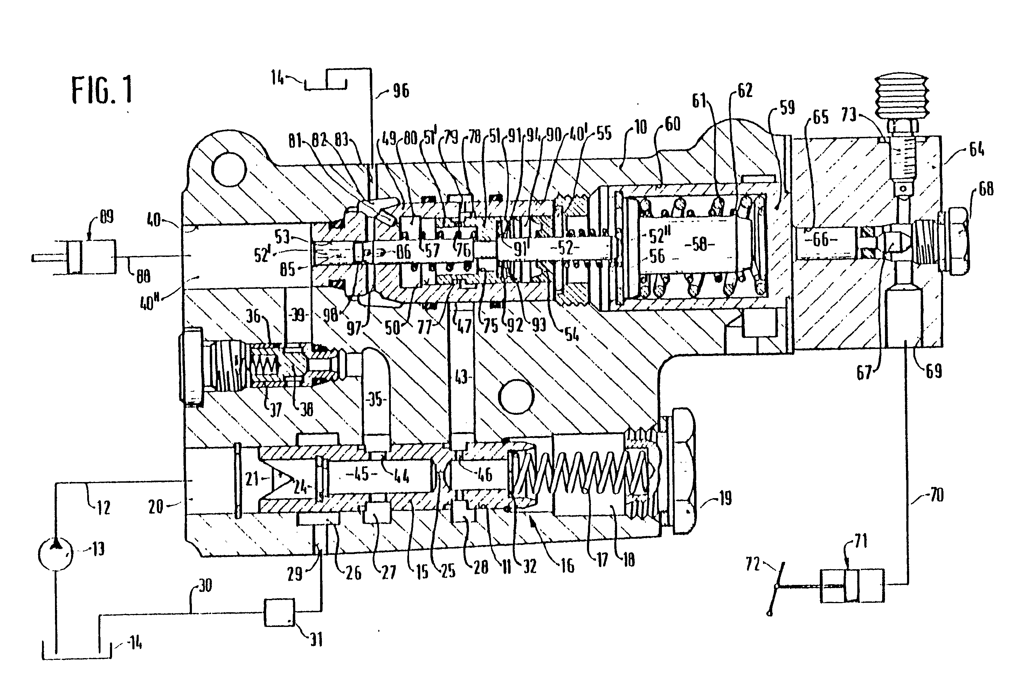

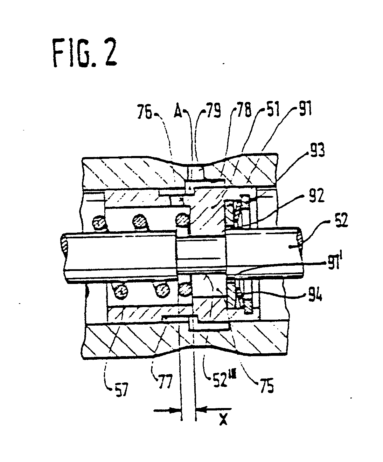

Ein Ausführungsbeispiel der Erfindung ist in der Zeichnung dargestellt und in der nachfolgenden Beschreibung näher erläutert. Die Zeichnung zeigt in Figur 1 einen Längsschnitt durch eine hydraulische Steuereinrichtung, in Figur 2 eine Einzelheit in vergrößerter Darstellung.

### Beschreibung des Ausführungsbeispiels

Die Steuereinrichtung weist ein Ventilgehäuse 10 mit einer durchgehenden Längsbohrung 11 auf, an welche eine Förderleitung 12 angeschlossen ist, in die eine Pumpe 13 aus einem Behälter 14 Druckmittel fördert. In der Längsbohrung 11 ist ein Steuerschieber 15 eines Stromregelventils 16 gleitend geführt, auf den entgegen dem einströmenden Druckmittel eine Regelfeder 17 einwirkt. Der hintere Teil der Bohrung 18, in welchem die Reglerfeder angeordnet ist, ist durch eine Verschlußschraube 19 dicht abgeschlossen. Dem Einlaß 20 der Längsbohrung 11 zugewandt, sind an der Stirnseite des Steuerschiebers 15 zwei Dreieckkerben 21 ausgebildet.

Im Inneren des Steuerschiebers 15 ist eine Blende 24 angeordnet, stromabwärts von dieser eine Drossel 25 mit wesentlich kleinerem Durchmesser als dem der Blende 24. An der Längsbohrung 11 sind drei Ringnuten 26, 27, 28 ausgebildet. Von der Ringnut 26 verläuft eine Bohrung 29 zum Äußeren des Ventilgehäuses ; dort ist eine Rückleitung 30 angeschlossen, die zum Behälter 14 oder zu einem Verbraucher 31 führt. Im hintersten Teil des Steuerschiebers 15 ist eine Drosselscheibe 32 angeordnet, über welche die Regelfeder 17 auf den Steuerschieber 15 einwirkt. Die Drosselscheibe 32 bewirkt lediglich eine Dämpfung der Bewegung des Steuerschiebers 15. In die Ringnut 27 mündet ein Kanal 35, in den eine Gehäusebohrung 36 eindringt, in welcher ein Ventileinsatz 37 mit kegeligem Rückschlagventil 38 eingesetzt ist. Von der Gehäusebohrung 36 geht ein Kanal 39 aus, der in eine parallel zur Längsbohrung 11 verlaufende Länghsbohrung 40 mündet.

Von der Ringnut 28 geht ein Kanal 43 aus, welcher in eine Ringnut 47 an einem erweiterten Teil 40' der Längsbohrung 40 mündet. In den zwischen der Blende 24 und der Drosselbohrung 25 gelegenen Raum 45 im Steuerschieber münden mehrere Radialbohrungen 44, die in Höhe der Ringnut 27 liegen. Stromabwärts der Drosselbohrung 25 münden in den hohlen Steuerschieber mehrere Radialbohrungen 46, die in Höhe der Ringnut 28 liegen.

Im erweiterten Teil 40' der Längsbohrung 40 ist ein becherförmiger Gehäuseeinsatz 49 angeordnet, in dessen Gehäusebohrung 50 ein Schieber 51 gleitend gelagert ist. An diesem ist mit axialem Spiel x ein von einer Feder (57) belasteter Kolben 52 gleitend geführt. Er bewegt sich in einer Ringnut 52''' des Kolbens 52, dessen linker Teil 52' dicht in einem achsgleich zur Gehäusebohrung 50 verlaufenden Bohrungsteil 53 gleitet, während sein rechter Teil 52'' durch eine Dichtmanschette 54 nach außen geführt ist. Die Dichtmanschette stützt sich an einer Scheibe 55 ab, gegen die sich auch eine um den rechten Teil 52'' des Kolbens gewickelte Feder 56 legt, deren anderes Ende an einem Federwiderlager 58 anliegt. Dieses ist in einem Kolben 59 angeordnet, der in einer Bohrung 60 gleitend gelagert ist, die achsgleich zur Gehäusebohrung 40 verläuft. Auf das Federwiderlager wirken Federn 61, 62 ein. Die Bohrung 60 ist durch ein Gehäuse 64 verschlossen, in dem eine Längsbohrung 65 gebildet ist, die achsgleich zur Gehäusebohrung 40 verläuft. In der Längsbohrung 65 ist ein Kolben 66 dicht gleitend gelagert. Er hat einen Stößel 67, der sich gegen eine die Längsbohrung 65 verschließende Verschlußschraube 68 legt. In die Längsbohrung 65 mündet eine im Gehäuse 64 verlaufende Querbohrung 69, an welche eine Leitung 70 angeschlossen ist. Diese geht aus von einem Druckgeber 71, der durch ein Bremspedal 72 betätigbar ist. An die Längsbohrung 65 ist noch eine Entlüftungsvorrichtung 73 angeschlossen.

Die Ringwand 51' des Schiebers 51 ist durch eine Querbohrung 76 durchbrochen, die Stirnwand durch eine Bohrung 75 ; erstere mündet in eine Ringnut 77, die mit einer Ringnut 78 im Gehäuseeinsatz 49 zusammenwirkt. Die beiden Ringnuten 77, 78 stehen über eine die Wand des Gehäuseeinsatzes 49 durchdringende Querbohrung 79 miteinander in Verbindung und damit mit dem Kanal 43. Vom Raum 80 innerhalb des Gehäuseeinsatzes 49 verläuft eine schräge Drosselbohrung 81 in eine Ringnut 82 des Bohrungsteils 40' der Gehäusebohrung 40. Von der Ringnut 82 verläuft eine Bohrung 83 zum Äußeren des Gehäuses. Weiterhin ist der Bohrungsteil 53 von einer im Gehäuseeinsatz 49 ausgebildeten Querbohrung 97 durchdrungen, die von der Mündung der Drosselbohrung 81 in die Ringnut 82 ausgeht. Am Kolben 52 ist an dessen linkem Teil 52' eine flache Ringnut 98 ausgebildet, von der eine Querbohrung 86 ausgeht, die in eine ebenfalls im linken Teil 52' des Kolbens 52 ausgebildete, längsverlaufende Sackbohrung 85 mündet. Von der Längsbohrung 40 bzw. einem dort gebildetem Raum 40" führt eine Leitung 88 zu einem Bremszylinder 89. Im Schieber 51 ist eine Scheibe 91 angeordnet, deren Innendurchmesser 91' gegenüber dem Außendurchmesser des Kolbens 52 einen Drosselspalt 92 bildet. Die Scheibe 91 wird durch eine sich an einem Sicherungsring 93 abstützenden Wellscheibe 94 in Position gehalten. Von der Bohrung 83 verläuft eine Leitung 96 zum Behälter 14.

Die Steuereinrichtung arbeitet wie folgt :

Die Pumpe 13 fördert Druckmittel über den Einlaß 20 in die Längsbohrung 11, wobei dieses auch in das Innere des Steuerschiebers gelangt. Ein Teil dieses Druckmittels fließt über die Blende 24, die Drosselbohrung 25 und die Drosselscheibe 32 in den Raum 18. Über die Drosselbohrung 25 gelangt ein Steuerölstrom zur Querbohrung 46, von dieser in die Ringnut 28 und den Kanal 43, von dort über die Ringnut 47 in die Querbohrung 79 des Gehäuseeinsatzes 49 und dann in die Ringnuten 78, 77 und die Querbohrung 76 zum Raum 80. Von dort fließt das Druckmittel über die Drosselbohrung 81 und die Leitung 96 zum Behälter 14 ab. Infolge des Durchflußwiderstands an der Blende 25 und der dabei erzeugten Druckdifferenz wird der Steuerschieber 15 entgegen der Kraft der Regelfeder 17 nach rechts verschoben und stellt über die Dreieckkerben 21 Verbindung zur Ringnut 26 und zur Leitung 30 und damit zum Behälter oder Verbrauchern her.

Wenn das Bremspedal 72 betätigt wird, baut sich in der Leitung 70 und in den Bohrungen 69 und 65 Druck auf, und der Kolben 66 wird entgegen dem Kolben 59 nach links verschoben. Das Federwiderlager 58 drückt auf den Kolben 52, wodurch dieser nach links verschoben wird samt dem Schieber 51. Im Bremsbetrieb fällt durch Leckage der im Bremszylinder 89 erzeugte Bremsdruck, und bei konstanter Kraft am Bremspedal 72 bewegt sich der Kolben 52 langsam nach links. Wie bereits oben beschrieben, wird der Schieber 51 vom Kolben 52 mitgenommen. Dabei verkleinert sich der Ringspalt A zwischen der Steuerkante des Schiebers 51 zur Querbohrung 79 hin. Der vom Kanal 43 zum Raum 80 fließende Steuerstrom wird angedrosselt. Dadurch werden am Schieber 51 Strömungskräfte wirksam, die diesen nach links bewegen und den Ringspalt A schließen. Nun wird die Verbindung vom Kanal 43 zum Raum 80 unterbrochen, so daß kein Steueröl mehr zum Behälter 14 abfließen kann. Nun wird die Druckdifferenz an der Blende 25 abgebaut, und die Feder 17 bewegt den Steuerschieber 15 nach links, wodurch die Querbohrungen 44 mit der Ringnut 27 in Verbindung kommen. Nun wird aufgrund des Druckabfalls an der Blende 24 ein Teil des von der Pumpe 13 geförderten Druckmittels in den Kanal 35 und über das sich öffnende Rückschlagventil 38 in den Kanal 39 geleitet, weiterhin von dort in die Längsbohrung 40 sowie über die Leitung 88 zum Bremszylinder 89. Der so erzeugte Bremsdruck wirkt ebenfalls auf den Kolben 52 und damit dem Ansteuerdruck entgegen.

Durch das Vorhandensein des axialen Spiels X wirken nur Reibkräfte gegen das Schließen. Der Ringspalt A verkleinert sich somit schnell. Dadurch wird der von der Pumpe erzeugte Förderstrom vom Steuerschieber 15 rasch angedrosselt und Druckmittel in den Bremskreis eingespeist.

Der Kolben 52 samt Schieber 51 werden nach rechts geschoben, bis sich der Ringspalt A wieder öffnet. Der Steuerstrom kann wieder vom Kanal 43 zum Raum 80 fließen und gibt ohne Androsselung des Steuerschiebers 15 den Druckmittelstrom von der Pumpe zum Weiterlauf frei. Wäre das axiale Spiel X nicht vorhanden, so würde in hohem Maß das sogenannte Festdrosseln eintreten, d. h. der Steuerschieber 15 würde nicht exakt in die gewünschte Sollstellung gelangen, was zu Energieverlusten durch Erwärmung des Druckmittels führt. Damit der Schieber 51 auch im vorgesehenen Sinn bewegt wird, ist die Feder 57 notwendig.

Die Drosselbohrung 81 hat die Aufgabe, daß auch bei sehr kurzer Rücklaufleitung 96 der Raum 90 ausreichend mit Druckmittel versorgt ist.

Um den Bremsdruck vollständig abbauen zu können, sind die Querbohrung 97, die Quer- und Längsbohrungen 85, 86 im Schieber 52' sowie die Ringnut 98 an der Außenseite des Schiebers vorgesehen, wobei die Ringnut 98 mit den genannten Bohrungen zusammenwirkt und in der gezeichneten Stellung den Raum 40" bzw. den Bremszylinder 89 zur Ringnut 82 und somit zum Behälter 96 verbindet.

## Patentansprüche

1. Hydraulische Steuereinrichtung, die das von einer Druckmittelquelle (13) geförderte Druckmittel über ein Stromregelventil (16) einem Verbraucher (31) oder einem Behälter (14) und über eine hydraulisch ansteuerbare Bremseinrichtung (88, 89) bei deren Aktivierung einem Bremszylinder (89) zuführt, wobei ein vom Stromregelventil abgezweigter Steuerölstrom (43) unterbrochen wird und in der Bremseinrichtung ein Bremsdruck erzeugt wird, die weiterhin einen mit einem Schieber (51) verbundenen Kolben (52) aufweist, der eine Dichtung (54) durchdringt und mittels einer Druckfeder (57) an einem Federwiderlager·(58) anliegt, wobei sich zwischen der Dichtung und dem Schieber ein Ringraum (90) befindet, der mit Druckmittel gefüllt ist, das bei einer Bewegung des Schiebers über eine erste Drossel (92) zu einem Rücklauf (96) verdrängt wird, und zwischen dem Ringraum (90) und dem Rücklauf (96) eine zweite Drossel (81) angeordnet ist, und wobei von einer Stelle stromabwärts dieser zweiten Drossel (81) eine Verbindung (52′, 86, 97, 98) über den Kolben (52) zu einem mit der Bremseinrichtung (88, 89) verbundenen Druckraum (40″) führt, dadurch gekennzeichnet daß der Schieber (51) mit axialem Spiel (X) gegenüber dem Kolben (52) gleitend geführt ist und durch die Druckfeder (57) an einen Bund desselben gedrückt wird.

2. Einrichtung nach Anspruch 1, dadurch gekennzeichnet, daß am Kolben (52) eine Ringnut (98) ausgebildet ist, über welche von einer Ringnut (82) in einer Gehäusebohrung (40′) über Bohrungen (85, 86, 97) eine Verbindung vom Bremszylinder (89) zum Behälter (14) hergestellt ist.

## Claims

1. Hydraulic control device which supplies the pressure medium delivered by a pressure medium source (13) to a consumer (31) or to a tank (14) via a flow control valve (16) and to a brake cylinder (89) via an hydraulically-operable brake device (88, 89) when activated, a control oil flow (43) branched off from the flow control valve being interrupted and a brake pressure being generated in the brake device, which furthermore has a plunger (52), connected to a slide valve (51), which plunger penetrates a seal (54) and rests by means of a compression spring (57) against a spring bearing bracket (58), there being between the seal and the slide valve an annular space (90) which is filled with pressure medium which, when there is a movement of the slide valve, is displaced via a first restrictor (92) to a return (96) and a second restrictor (81) being arranged between the annular space (90) and the return (96). and a connection (52′, 86, 97, 98) leading from a point downstream of this second restrictor (81) via the plunger (52) to a pressure space (40″) connected to the brake device (88, 89), characterized in that the slide valve (51) is slidingly glided with axial play (X) with respect to the plunger (52) and is pressed by the compression spring (57) against a collar of the same.

2. Device according to Claim 1, characterized in that on the plunger (52) there is an annular groove (98), via which a connection from the brake cylinder (89) to the tank (14) is established by an annular groove (82) in a casing bore (40′) via bores (85, 86, 97).

## Revendications

1. Installation de commande hydraulique, qui envoie le fluide sous pression, amené d'une source (13) de fluide sous pression, par l'intermédiaire d'une soupape (16) de réglage du courant à un récepteur (31) ou à un réservoir (14), et par l'intermédiaire d'un dispositif de freinage (88, 89) susceptible d'être commandé hydrauliquement, lors de sa mise en action, à un cylindre de frein (89) un courant d'huile de commande (43) dérivé de la soupape de réglage du courant étant alors interrompu et une pression de freinage étant alors produite dans le dispositif de freinage, installation qui, d'autre part, comporte un piston (52) relié à un coulisseau (51) et qui traverse un joint d'étanchéité (54) et s'appuie au moyen d'un ressort de pression (57) contre une contre-butée élastique (58), une chambre annulaire (90) se trouvant entre le joint d'étanchéité et le coulisseau et étant remplie de fluide sous pression qui, lors d'un déplacement du coulisseau, est repoussé en passant par un premier étranglement (92), vers un retour (96), un second étranglement (81) étant disposé entre la chambre annulaire (90) et le retour (96) et, à partir d'un endroit situé en aval de ce second étranglement (81), une liaison (52′, 86, 97, 98) menant au-delà du piston (52), à une chambre sous pression (40″) reliée au dispositif de freinage (88, 89), installation de commande hydraulique caractérisée en ce que le coulisseau (51) est guidé en glissant avec un jeu axial (X) par rapport au piston (52) et est poussé par le ressort de pression (57) contre un collet de butée de ce piston.

2. Installation de commande hydraulique selon la revendication 1, caractérisée en ce que sur le piston (52) est constituée une gorge annulaire (98), par l'intermédiaire de laquelle, à partir d'une gorge annulaire (82) ménagée dans un alésage (40′) du carter, en passant par des alésages (85, 86, 97), est établie une liaison allant du cylindre de frein (89) au réservoir (14).

FIG.1

0 122 384

# FIG. 2